# Europäisches Patentamt
# European Patent Office
# Office européen des brevets

(19)

(11) Veröffentlichungsnummer: **0 110 920**
**B1**

(12) **EUROPÄISCHE PATENTSCHRIFT**

(45) Veröffentlichungstag der Patentschrift:
02.09.87

(21) Anmeldenummer: 83901702.7

(22) Anmeldetag: 25.05.83

(86) Internationale Anmeldenummer:
PCT/DE 83/00096

(87) Internationale Veröffentlichungsnummer:
WO 83/04286 (08.12.83 Gazette 83/28)

(51) Int. Cl.⁴: **F 04 D 15/00**, F 04 B 49/00,
G 01 L 9/06, G 01 L 19/04,
G 01 L 19/00

(54) ANORDNUNG ZUR FLUIDDRUCKABHÄNGIGEN REGELUNG DES ANTRIEBSMOTORS EINER STRÖMUNGSMASCHINE.

(30) Priorität: 29.05.82 DE 3220467
29.05.82 DE 3220466
29.09.82 DE 3235947

(43) Veröffentlichungstag der Anmeldung:
20.06.84 Patentblatt 84/25

(45) Bekanntmachung des Hinweises auf die Patenterteilung:
02.09.87 Patentblatt 87/36

(84) Benannte Vertragsstaaten:
AT BE CH DE FR GB LI NL SE

(56) Entgegenhaltungen:
DE-A-2 241 883
DE-A-2 424 839
DE-A-2 544 518
DE-A-2 607 285
DE-A-2 934 076
DE-A-2 946 049
FR-A-1 067 783
FR-A-2 393 963
US-A-3 187 510
US-A-4 320 664

(73) Patentinhaber: CHRISTLIEB, Jan, Waldweg 34,
D-2071 Todendorf (DE)
Patentinhaber: MÜLLER, Karl, Mozartweg 3, D-2351
Trappenkamp (DE)

(72) Erfinder: CHRISTLIEB, Jan, Waldweg 34, D-2071
Todendorf (DE)
Erfinder: MÜLLER, Karl, Mozartweg 3, D-2351
Trappenkamp (DE)

(74) Vertreter: Schmidt- Bogatzky, Jürgen, Dr. Ing.,
Schlossmühlendamm 4, D-2100 Hamburg 90 (DE)

EP 0 110 920 B1

## Beschreibung

Die Erfindung betrifft eine Anordnung zur fluiddruckabhängigen Regelung des Antriebsmotors einer Strömungsmaschine, insbesondere Pumpe, bei der das Ausgangssignal eines mit dem zu messenden Fluid in Wirkverbindung stehenden Druckaufnehmers auf einen Regler einwirkt, der zur Regelung des Antriebsmotor dient.

Eine derartige Anlage ist durch die DE-A- 26 07 285 bekannt geworden, bei der die Signale zur Steuerung der Motordrehzahl aus dem Vergleich des Sollwertes mit dem Istwert der Förderhöhe und bzw. oder der Fördermenge abgeleitet werden. Hierbei wird durch ein zeitlich begrenztes Anheben des Sollwertes oder Vortäuschen eines Istwertes, der kleiner ist als der tatsächliche Istwert bzw. durch ein zeitlich begrenztes Absenken des Sollwertes oder Vortäuschen eines Istwertes, der größer ist als der tatsächliche Istwert, eine tatsächliche oder eine vorgetäuschte Sollwert-Istwert-Differenz hervorgerufen, durch die die Strömungsmaschine gesteuert wird. Durch diese Anordnung soll ein konstanter Druck und eine konstant gehaltene Fördermenge geregelt werden. Diese Anordnung weist jedoch den Nachteil auf, daß Druckschwankungen im Netz auftreten, was insbesondere bei verzweigten Netzen verbraucherseitig als unangenehm empfunden wird, da unter Umständen hydraulische Schwingungen im System auftreten können. Dieses wird noch dadurch verstärkt, daß der Istwerterfasser der bekannten Anordnung nicht temperaturkompensiert und nur zur Messung absoluter Drücke geeignet ist. In der US-A- 4 320 664 ist zwar ein temperaturkompensierter elektronischer Drucksensor beschrieben der jedoch ebenfalls nur zur Messung von Absolutdrücken geeignet ist und die hydraulischen Schwankungen im System nicht verhindern kann. Um diese Nachteile zur beseitigen, sind bereits elektronische Druckaufnehmer für Differenzdruckmessung vorgeschlagen worden. Bei Differenzdruckmessungen ist stets zu beachten, daß elektronische Drucksensoren nur mit bestimmten maximalen Differenzdrücken beaufschlagt werden können. Um die jeweils anfallenden Anwendungsbereiche berücksichtigen zu können, ist daher eine Lagerhaltung von elektronischen Drucksensoren mit unterschiedlichen Leistungen erforderlich, was als nachteilig empfunden wird und kostensteigernd ist.

Die Aufgabe der Erfindung besteht darin, die gattungsgemäße Anordnung so zu verbessern, daß unter Verwendung eines an sich bekannten elektronischen Drucksensors mit piezoresistiven Siliziumkristall eine einfache und preiswerte Regelung des Antriebsmotors einer Strömungsmaschine wie insbesondere einer Pumpe in Abhängigkeit von dem Differenzdruck des von der Strömungsmaschine zu fördernden Fluid möglich ist. Für den elektronischen Drucksensor soll ferner eine Einrichtung geschaffen werden, mittels derer elektronische Drucksensoren auch für von deren Auslegungsbereich abweichende Differenzdruckmessungen verwendet werden können, damit die Aufwendungen für die Lagerhaltung verringert werden.

Erfindungsgemäß erfolgt die Lösung der Aufgabe durch die Kombination

a) des als Differenzdruckaufnehmer ausgebildeten piezoresistiven Silizium-Druckaufnehmers mit einem Drucksensor, dessen Siliziumbrücke mit einer Isolierschicht beschichtet und mit einer Temperaturkompensationseinrichtung verbunden ist, wobei der Drucksensor in einem Halter gelagert ist, mittels dem der an dem Drucksensor maximal meßbare Differenzdruck einstellbar ist,

b) eines von dem temperaturkompensierten Ausgangssignal des Druckaufnehmers beaufschlagten Spannungs/Stromumsetzers und

c) des von dem Ausgangswert des Spannungs/Stromumsetzers beaufschlagten Reglers oder Stellers, der mit dem Antriebsmotor der Strömungsmaschine in Wirkverbindung steht.

Der Ausgang des Spannungs/Stromumsetzers ist über einen A/D-Wandler mit einer elektronischen Recheneinheit zur digitalen Meßwertverarbeitung und - anzeige verbunden. Die Temperaturkompensationseinrichtung ist mit dem Spannungs/Stromumsetzer und zusätzlich mit einer Analoganzeige verbunden. Diese Anordnung ermöglicht eine analoge Meßwertaufnahme und Meßwertverarbeitung in dem Regler oder Steller, wobei gleichzeitig die Mäglichkeit besteht, die aufgenommen Meßwerte in einer Analoganzeige abzubilden und den Meßwertaufnehmer über einen A/D-Wandler mit einer Recheneinheit zu verbinden, mittels derer beispielsweise der Betrieb des das Fluid enthaltenden Systemes optimiert werden kann.

Weitere Merkmale der Erfindung werden in den abhängigen Ansprüchen beschrieben.

In den Zeichnungen sind Ausführungsbeispiele der Erfindung dargestellt, die nachstehend näher erläutert werden. Es zeigt

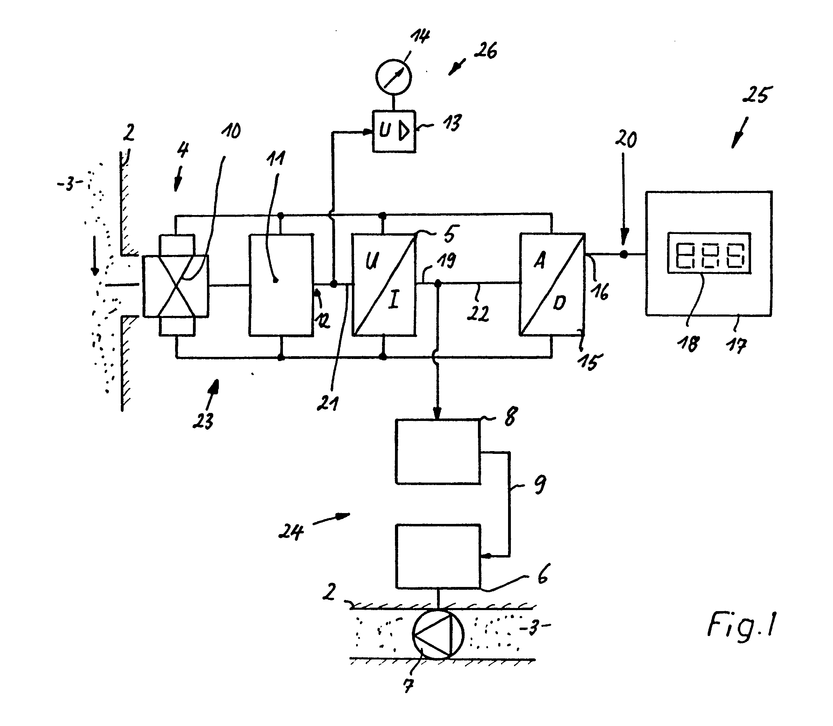

Fig. 1 eine als Schaltbild dargestellte erfindungsgemäße Anordnung zur Durchführung der fluiddruckabhängigen Regelung,

Fig. 2 je einen Halter für den Drucksensor in und 2a einer Seitenansicht im teilweisen Schnitt,

Fig. 3 eine Queransicht auf den Halter nach Fig. 1 im Schnitt A-A,

Fig. 4 eine weitere Ausbildung eines Halters für den Drucksensor in einer Queransicht im Schnitt wie nach Fig. 2,

Fig. 5a eine weitere Ausbildung eines Halters für den und 5b Drucksensor in der Seitenansicht,

Fig. 6a einen für den Drucksensor vorgesehenen Halter und 6b mit Sicherheitsventil in der Seitenansicht.

Die Anordnung besteht aus einer Meßwertaufnahmeeinrichtung 23 und einer Regeleinrichtung 24, wobei zusätzlich noch eine Meßwertverarbeitungseinrichtung 25 und eine Anzeigeeinheit 26 vorgesehen sein kann.

Die Meßwertaufnahmeeinrichtung 23 weist einen elektronischen Druckaufnehmer 4 und eine Temperaturkompensationseinrichtung 11 auf. Der Druckaufnehmer 4 ist als piezoresistiver Silizium-Drucksensor ausgebildet, dessen Siliziumbrücke 10 mit dem Rohr oder Kanal 2 in Wirkverbindung steht, durch den das zu messende Fluid 3 strömt. Um Beeinträchtigungen der Siliziumbrücke 10 zu verhindern, ist diese mit einer nicht näher dargestellten Isolierschicht beschichtet. Die Siliziumbrücke 10 ist mit einer Temperaturkompensationseinrichtung 11 verbunden, mittels derer die Druckmeßwerte des Fluids 3 im Hinblick auf dessen Temperaturschwankungen kompensiert werden. An dem Ausgang 12 der Temperaturkompensationseinrichtung 11 ist mittels einer Steuerleitung 21 ein Spannungs/Stromumsetzer 5 angeschlossen. Dieser ermöglicht es, daß das Ausgangssignal des Druckaufnehmers 4 in einen Strom- oder Spannungswert umgesetzt wird, der über den Ausgang 19 des Spannungs/Stromumsetzers 5 einem Regler oder Steller 8 aufgeschaltet wird. Der Ausgangswert des Spannungs/Stromumsetzers 5 kann z. B. 0 bis 20 mA oder 0 bis 10 V betragen. Der Regler oder Steller 8 steht über eine Steuerleitung 9 mit dem Antriebsmotor 6 der Strömungsmaschine 7 in Verbindung. Wird ein Steller 8 verwendet, so kann dieser z. B. als Frequenzumrichter ausgebildet sein.

Zur Überwachung der Funktion der Anordnung ist es zweckmäßig, diese mit einer Anzeigeeinheit 26 und/oder einer Meßwertverarbeitungseinheit 25 zu verbinden.

Die Anzeigeeinheit 26 besteht aus einer Analoganzeige 14, die über einen Verstärker 13 zur Meßspannungsverstärkung mit dem Ausgang 12 der Temperaturkompensationseinrichtung 11 verbunden ist.

Die Meßwertverarbeitungseinrichtung 25 besteht aus einer elektronischen Recheneinheit 17, die eine Digitalanzeige 18 aufweisen kann. Über eine Schnittstelle 20 ist die elektronische Recheneinheit 17 mit dem Ausgang 16 eines A/D-Wandlers 15 verbunden, der über eine Steuerleitung 22 mit dem Spannungs/Stromumsetzer 5 verbunden ist. Die elektronische Recheneinheit 17 kann als Prozessorschaltung oder aber auch als Mikroprozessor ausgebildet sein. Eine Ausbildung der elektronischen Recheneinheit 17 als Mikrocomputer kann dann von Vorteil sein, wenn die Anordnung 1 Teil eines vermaschten Systems von verschiedenen Druckaufnehmern 4 und zugeordneten Antriebsmotoren 6 ist, die im Betrieb aufeinander optimiert abgestimmt werden müssen.

Die Anordnung ermöglicht einen einfachen und preiswerten Einsatz von elektronischen Druckaufnehmern 4 zur Regelung von Strömungsmaschinen 7, wobei die Meßgenauigkeit im Zeitablauf nicht beeinträchtigt wird.

Insbesondere die Kombination der einzeln beschriebenen Elemente ermöglicht es, Meßwertaufnahmeeinrichtung 23 und Regeleinrichtung 24 funktional in ein größeres Regelsystem zu integrieren. Es ist hierbei auch möglich, den Druckaufnehmer 4 als Differenzdruckaufnehmer auszubilden.

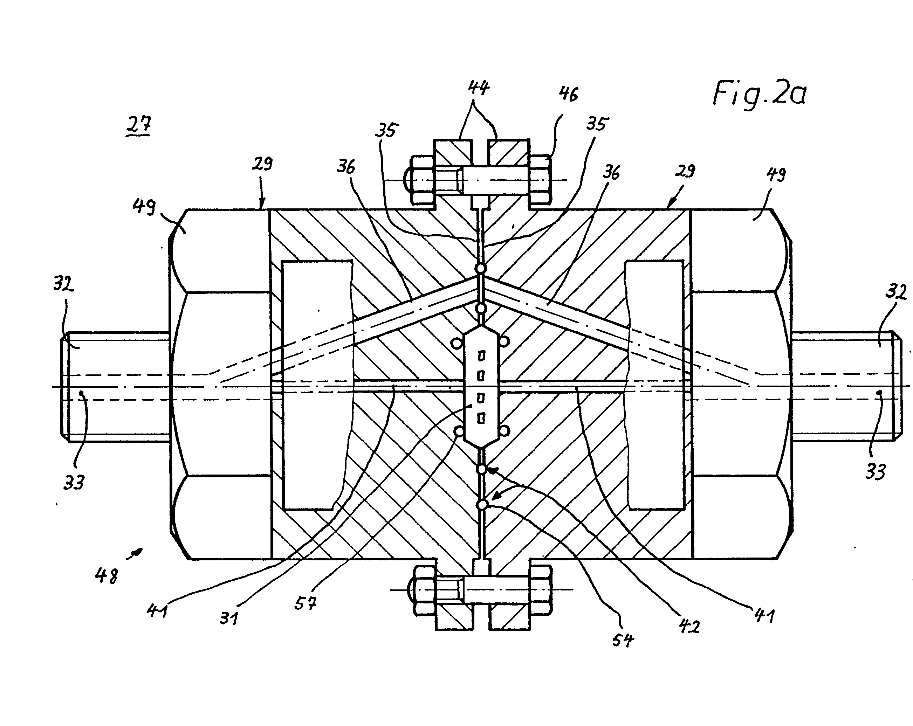

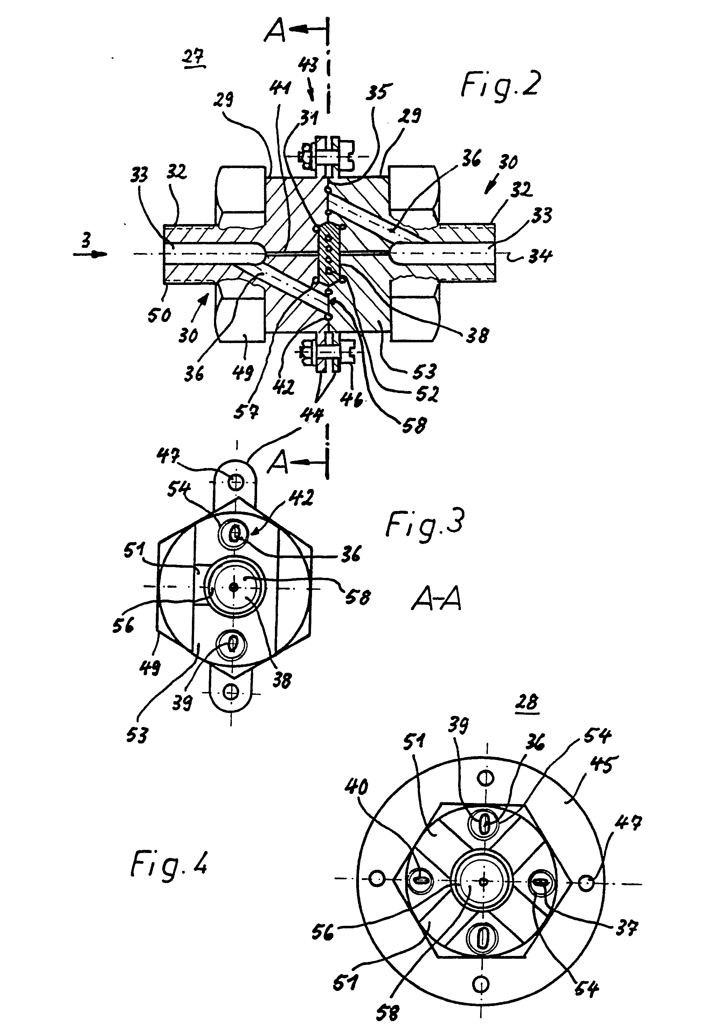

Der in Fig. 2 dargestellte Halter 27 besteht aus zwei Haltestücken 29, die jeweils einen zylindrischen Grundkörper 53 aufweisen. An den äußeren Endabschnitten 30 der Haltestücke 29 ist jeweils koaxial zur Mittelachse 34 ein zapfenförmiges Anschlußstück 32 ausgebildet. An dem Endabschnitt 30 eines jeden Haltestücks 29 ist ferner als Handhabe 48 für einen Werkzeugeingriff od.dgl. ein Sechskant 49 ausgebildet. In den einander zugewandten Flächen 35, 35 der Haltestücke 29, 29 ist mittig eine Ausnehmung 38, 38 vorgesehen, die zur Aufnahme eines Drucksensors 31 dient. Jede Ausnehmung 38 ist mittels einer kanalartigen Durchbrechung 41 mit dem Anschlußstück 32 verbunden. In den Anschlußstücken 32 sowie in den Endabschnitten 30 des Grundkörpers 53 eines jeden Haltestücks 29 ist eine mit der Durchbrechung 41 verbundene kanalartige Ausnehmung 33 vorgesehen, deren Querschnitt größer ist als der Querschnitt der Durchbrechung 41. Zwischen der Ausnehmung 33 und der Fläche 35 ist ferner eine kanalartige Durchbrechung 36 ausgebildet, deren in der Ebene der Fläche 35 befindliche Öffnung 39 im Abstand von der Ausnehmung 38 angeordnet ist. Der Querschnitt der Durchbrechung 36 ist größer als der der Durchbrechung 41. Im Bereich der Öffnung 39 sind Führungsglieder 42 an den Flächen 35 vorgesehen, mittels derer die Haltestücke 29 bei einem Wirkeingriff der drehbar sind.

Die Haltestücke 29 sind mittels der Führungsglieder 42 derart in der Ebene der Flächen 35 unverdrehbar aneinander zur Anlage bringbar, daß entweder jeweils eine Durchbrechung 36 des einen Haltestücks 29 mit der gleichgroßen Durchbrechung 36 des anderen Haltestücks 29 in hydraulischer oder pneumatischer Wirkverbindung steht oder aber die Öffnung 39 der Durchbrechnungen 36 der Haltestücke 29, 29 durch flächige Abschnitte 58 der Flächen 35, 35 abgesperrt sind (Fig. 2, 2a).

Die Durchbrechungen 36 wirken wie ein Beipaß zu den Durchbrechungen 41. Wenn die Öffnung 39 der Durchbrechungen 36 durch entsprechende Stellung der Haltestücke 29, 29 zueinander abgesperrt sind, wird der Drucksensor 30 über die Durchbrechungen 41 mit dem vollen an den Anschlußstücken 32 anliegenden Differenzdruck beaufschlagt. Wenn dagegen die Durchbrechungen 36 nicht abgesperrt sind und als Beipaß wirken, üben die Durchbrechungen 41 die Funktion einer Drossel aus, wodurch der überwiegende Druckausgleich über die Durchbrechungen 36 erfolgt. Hierdurch ist es möglich, in Abhängigkeit vom Querschnittsverhältnis der Flächen der Durchbrechungen 36, 41 den Drucksensor 31 zur Messung von solchen Differenzdrücken vorzusehen, für die der Drucksensor 31 selbst nicht ausgelegt ist.

An den aneinander zur Anlage bringbaren Endabschnitten 43, 43 der Haltestücke 29, 29 ist umfangseitig jeweils ein flanschartiger Steg 44 ausgebildet. In jedem Steg 44 ist eine Durchbrechung 47 vorgesehen, durch die Schrauben gesteckt werden können. Diese Schrauben dienen zur Herstellung von Schraubverbindungen 46, mittels derer die aneinander zur Anlage bringbaren Haltestücke 29 miteinander verbindbar sind. Es ist auch möglich, statt der Schraubverbindungen 46 oder aber ergänzend zu diesen Klebverbindungen vorzusehen. Darüber hinaus besteht auch die Möglichkeit, nach Herstellung der Verbindung der beiden Haltestücke 29 die Stege 44 mit einem gemeinsamen Überzug aus Gießharz od.dgl. zu versehen. Hierdurch ist gewährleistet, daß der Halter 27 nicht mehr zerstörungsfrei zerlegt werden kann.

In der Fläche 35 eines jeden Haltestücks 29 ist ferner eine von der mittigen Ausnehmung 38 sich radial bis zum äußeren Umfang des Grundkörpers 53 erstreckende Ausnehmung 51 ausgebildet. Der durch zwei Ausnehmungen 51 gebildete Hohlraum ist stets so bemessen, daß bei miteinander verbundenen Haltestücken 29 ein Stecker mit den Kontakten 52 des Drucksensors 31 verbunden werden kann.

Wie in Fig. 4 dargestellt, können in jedem Haltestück 29 auch zwei Durchbrechungen 36, 37 vorgesehen werden, die jeweils einen voneinander unterschiedlichen Querschnitt aufweisen. Jeder Öffnung 39, 40 der Durchbrechung 36, 37 sind auch bei diesem Halter 28 Führungsglieder 42 zugeordnet. Durch die zusätzlichen Durchbrechungen 40 kann ein aus diesen Haltestücken 29 bestehender Halter 28 für einen gegenüber dem Halter 27 zusätzlichen Differenzdruckbereich verwendet werden. Um die Kontakte 52 des Drucksensors 31 bei einem Halter 28 stets mit einem Stecker verbinden zu können, sind in den Flächen 35 der Haltestücke 29 in diesem Fall jeweils vier rechtwinklig zueinander angeordnete Ausnehmungen 51 vorgesehen. Die nicht für die Kontakte 52 des Drucksensors 31 benötigten Ausnehmungen 51 können nach Verbindung der Haltestücke 29 durch Gießharz od.dgl. verschlossen werden. Der flanschartige Steg 45 der Haltestücke 29 des Halters 28 ist als Kreisringflansch ausgebildet und weist jeweils vier Durchbrechungen 47 für die Schrauben der nicht näher dargestellten Schraubverbindungen 46 auf.

Der Druck des Fluids 3 wird über die Anschlußstücke 32 dem Drucksensor 31 zugeführt. An dem äußeren Umfang der zapfenförmig ausgebildeten Haltestücke 32 ist ein Außengewinde 50 vorgesehen, auf das Verbindungsleitungen oder Armaturen aufgeschraubt werden können. Es ist auch

möglich, die Außenflächen der Anschlußstücke 32 gewindelos mit einem zylindrischen oder konischen Querschnitt auszubilden. In diesem Fall erfolgt die Verbindung mit den Anschlußleitungen mittels nicht näher dargestellter Klemmverbindungen.

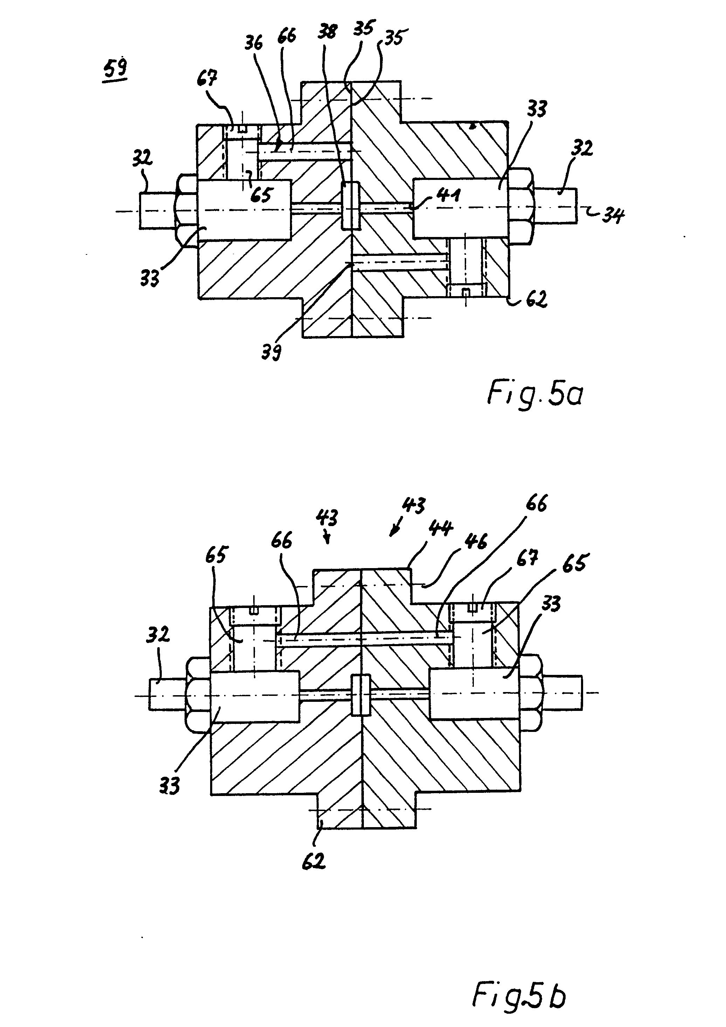

In den Fig. 5a und 5b ist eine weitere Ausführungsform eines Halters 59 dargestellt. Dieser Halter besteht aus zwei Haltestücken 62, bei denen ebenfalls zur Durchbrechung 41 parallel ein Beipaß ausgebildet ist. Dieser besteht aber nicht aus zur Mittelachse 34 schiefwinklig gebohrten Durchbrechungen wie beim Halter 27, 28, sondern aus zwei rechtwinklig zueinander angeordneten Kanalschnitten 65, 66. Der Kanalabschnitt 65 ist als Durchbohrung zwischen der Ausnehmung 33 und dem äußeren Umfang des Haltestücks 62 ausgebildet. Der Innenmantel des Kanalabschnitts 65 ist mit einem Gewinde versehen, so daß der ausgangsseitige Abschnitt des Kanalabschnitts 65 mittels eines Stopfens 67 verschlossen werden kann. Rechtwinklig zum Kanalabschnitt 65 ist ein weiterer Kanalabschnitt 66 vorgesehen, der sich bis zur Fläche 35 erstreckt. Die Ausbildung des Beipasses mittels der Kanalabschnitte 65, 66 erleichtert die Fertigung des Halters 59 gegenüber dem Halter 27, 28 erheblich, da die Anforderungen an die Bearbeitungsgenauigkeit geringer sind.

Zweckmäßig ist es, den den Kanalabschnitt 65 verschließenden Stopfen als Drosselstück 69 auszubilden. Dieser Stopfen 69 ist ein Gewindestück, an dem außenseitig ein Stellglied 73 ausgebildet ist. Dieses Stellglied 73 kann z. B. aus einem Schlitz für Schraubenzieher od.dgl. bestehen. In dem Stopfen 69 ist eine sacklochartige Ausnehmung 70 ausgebildet. Ferner weist der Mantel 71 im Bereich der Ausnehmung 70 eine Durchbrechung 72 auf. Diese Durchbrechung 72 kann als Düse oder Drossel ausgebildet sein. Wenn eine Differenzdruckmessung über den durch die Kanalabschnitte 65, 66 gebildeten Beipaß gewünscht wird, ist es lediglich erforderlich, die Stopfen 69 so in den Kanalabschnitten 65 zu verdrehen, daß die Durchbrechungen 72 den Kanalabschnitten 66 zugeordnet sind. Da die Durchbrechungen 72 hinsichtlich ihrer geometrischen Gestaltung exakt bestimmt sind, ist über den Beipaß eine genaue Differenzdruckmessung möglich. Soll keine Differenzdruckmessung über den Beipaß erfolgen, ist es lediglich erforderlich, mindestens einen Stopfen 69 um 90° zu verdrehen, so daß über die Durchbrechung 72 keine Strömungsverbindung zwischen den Ausnehmungen 33 der Haltestücke 62 besteht.

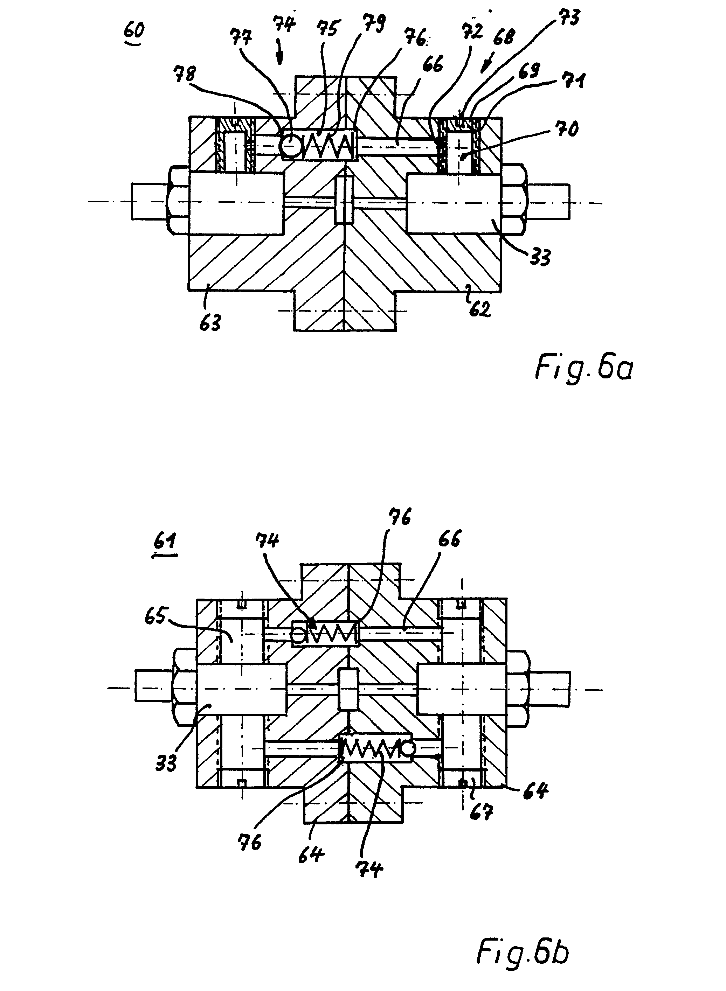

Elektronische Drucksensoren 31 sind aufgrund ihrer mechanischen Festigkeit nur begrenzt mit Druck beaufschlagbar. Um zu verhindern, daß bei Betriebsstörungen Differenzdrücke auftreten, die den Drucksensor 31 beschädigen, ist es möglich, Überdruckventile 74 vorzusehen. Ein solcher Halter 60, 61 ist in den Fig. 6a und 6b dargestellt.

Bei dem Halter 60 ist in einem Haltestück 63 der der Fläche 35 zugewandte Abschnitt des Kanalabschnitts 66 zu einer Kammer 75 erweitert, die zur Aufnahme des Überdruckventils 74 dient. Der Übergang von der Kammer 75 zum Kanalabschnitt 66 ist als Ventilsitz 77 ausgebildet, auf den eine Kugel 78 mittels einer Feder 79 gepreßt wird. Die Feder 79 ist in einer Ausnehmung 76 des anderen Haltestücks 62 gelagert. Dieses erleichtert die Montage des Halters 60 mit dem Überdruckventil 74. Es ist aber auch möglich, die Feder 79 direkt auf der Fläche 35 des Haltestücks 62 abzustützen. Wenn der Differenzdruck eine bestimmte Größe überschreitet, öffnet das Überdruckventil 74 und über den Beipaß erfolgt ein Druckausgleich zwischen den Ausnehmungen 33 der Haltestücke 63, 62.

Sofern mit wechselndem Differenzdruck zu rechnen ist, wird der Halter 61 verwendet, der zwei Überdruckventile 74 aufweist. Der Halter 61 besteht aus zwei Haltestücken 64, die jeweils zwei parallel zueinander angeordnete Kanalabschnitte 66 aufweisen. Zwei Kanalabschnitte 65 sind beidseitig zu den Ausnehmungen 33 ausgebildet. In dem einen Kanalabschnitt 66 ist eine Kammer 75 für das Überdruckventil 74 und in dem anderen Kanalabschnitt 66 eine Ausnehmung 76 als Ventillager für das andere Überdruckventil 74 vorgesehen.

Da beim Ansprechen des oder der Überdruckventile 74 der auf den Drucksensor 31 einwirkende Differenzdruck aufgrund des Druckausgleichs über den Beipaß gegen Null strebt, kann dieser Störungsfall mittels eines geeigneten Schaltglieds angezeigt werden. Dieser Störungsmelder ist mit den Ausgängen des Drucksensors 31 zu verbinden.

Die Einstellung des an dem jeweiligen Drucksensor 31 maximal messbaren Differenzdrucks erfolgt dadurch, daß die Haltestücke 29, 29; 62, 62; 63, 63; 64, 64 der Halter 27, 28, 59, 60, 61, im voneinander gelösten Zustand um ihre gemeinsame Mittelachse 34 um einen vorbestimmten Winkel gedreht und dann miteinander verbunden werden.

**Patentansprüche**

1. Anordnung zur fluiddruckabhängigen Regelung des Antriebsmotors (6) einer Strömungsmaschine (7), insbesondere Pumpe, bei der das Ausgangssignal eines mit dem zu messenden Fluid in Wirkverbindung stehenden Druckaufnehmers (4) auf einen Regler (8) einwirkt, der zur Regelung des Antriebsmotors (6) dient, gekennzeichnet durch die Kombination
a) des als Differenzdruckaufnehmer ausgebildeten piezorisistiven Silizium-Druckaufnehmers (4) mit Drucksensor (31), dessen Siliziumbrücke (10) mit einer Isolierschicht beschichtet und mit einer Temperaturkompensationseinrichtung (11) verbunden ist, wobei der Drucksensor (31) in einem Halter (27, 28, 59, 60, 61) gelagert ist, mittels dem der an dem Drucksensor (31) maximal meßbare Differenzdruck einstellbar ist,
b) eines von dem temperaturkompensierten Ausgangssignal des Druckaufnehmers (4) beaufschlagten Spannungs/Stromumsetzers (5) und
c) des von dem Ausgangswert des Spannungs/-Stromumsetzers (5) beaufschlagten Reglers oder Stellers (8), der mit dem Antriebsmotor (6) der Strömungsmaschine (7) in Wirkverbindung steht.

2. Anordnung nach Anspruch 1, dadurch gekennzeichnet, daß der Ausgang (19) des Spannungs/Stromumsetzers (5) über einen A/D-Wandler (15) mit einer elektronischen Recheneinheit (17) zur digitalen Meßwertverarbeitung und-anzeige verbunden ist.

3. Anordnung nach Anspruch 1, dadurch gekennzeichnet, daß die Temperaturkompensationseinrichtung (11) mit dem Spannungs/Stromumsetzer (5) und zusätzlich mit einer Analoganzeige (14) verbunden ist.

4. Anordnung nach Anspruch 2, dadurch gekennzeichnet, daß der Ausgang (12) der Temperaturkompensationseinrichtung (11) mit einem Verstärker (13) verbunden ist, der mit einer Analoganzeige (14) in Wirkverbindung steht.

5. Anordnung nach Anspruch 1, dadurch gekennzeichnet, daß die elektronische Recheneinheit (17) eine Digital-Anzeige (18) aufweist.

6. Anordnung nach Anspruch 1, dadurch gekennzeichnet, daß der Steller (8) als Frequenzumsetzer ausgebildet ist.

7. Anordnung nach Anspruch 1, dadurch gekennzeichnet, daß der Halter (27, 28, 59, 60, 61) aus zwei miteinander verbundenen Haltestücken (29, 29; 62, 62; 63, 63; 64, 64) besteht, die zur Einstellung des am Drucksensor (31) maximal meßbaren Differenzdrucks im voneinander gelösten Zustand um ihre gemeinsame Mittelachse (34) um einen vorbestimmten Winkel drehbar sind und in deren einander zugewandten Flächen (35, 35) mittig eine Ausnehmung (38, 38) zur Aufnahme des Drucksensors (31) ausgebildet ist, die jeweils mittels einer kanalartigen Durchbrechung (41, 41) mit einer kanalartigen Ausnehmung (33) verbunden sind, die jeweils in einem an dem äußeren Endabschnitt (30, 30) der Haltestücke (29, 29; 62, 62; 63, 63; 64, 64) angeordneten Anschlußstück (32, 32) ausgebildet ist, und daß zwischen der Ausnehmung (33) und der Fläche (35) eines jeden Haltestücks (29, 29; 62, 62; 63, 63; 64, 64) mindestens eine kanalartige Durchbrechung (36, 37) mit einem größeren Querschnitt als der Querschnitt der Durchbrechung (41) ausgebildet ist, deren in der Ebene der Fläche (53) befindliche Öffnung (39, 40) im Abstand von der Ausnehmung (38) angeordnet ist.

**Claims**

1. Arrangement for the control of a fluid pressure of the engine (6) of a turbomachine (7), particularly a pump, with the output signal of a pressure pick-off (4) connected with the fluid and acting on a regulator (8), used for control of the engine (6), characterized by the combination of
a) a piezoresistive silicon pressure sensing-means (4) with pressure sensor (31), being constructed as a differential pressure pick-off, with a silicon bridge (10) coated with an insulating and connected to a temperature compensator (11), whereby pressure sensor (31) is arranged in a support (27, 28, 59, 60, 61) to adjust maximum measurable differential pressure on pressure sensor (31),
b) a voltage/current converter (5) operable by the temperature-compensated output signal of said pressure sensing means (4), and
c) a regulator or regulating unit (8) coupled to the output of said voltage/current converter (5), being in operative connection with the engine (6) of the turbomachine (7).

2. Arrangement according to claim 1, characterized in that the output (19) of the voltage/current converter (5) ist connected via an A/D-converter (15) to an electronic computer (17) for digital test value processing and display.

3. Arrangement according to claim 1, characterized in that temperature compensator (11) is connected to the voltage/current converter (5) and additionally to analog display (14).

4. Arrangement according to claim 2, characterized in that output (12) of temperature compensator (11) is connected to the voltage/current converter (5) being in operative connection to analog display (14).

5. Arrangement according to claim 1, characterized in that the electronic computer (17) has a digital display (18).

6. Arrangement according to claim 1, characterized in that the regulating unit (8) is constructed as frequency inverter.

7. Arrangement according to claim 1, characterized in that support (27, 28, 59, 60, 61) comprises two interconnected support parts (29, 29; 62, 62; 63, 63; 64, 64), which, being separated, can be rotated about their common central axis (34) by a predetermined angle for setting the maximum measurable pressure difference on pressure sensor (31) and which provide a centrally arranged recess (38, 38) in their facing faces (35, 35) for receiving the pressure sensor (31), which are in each case connected by means of a channel-like opening (41, 41) to a channel-like recess (33) formed in each case in a connecting piece (32, 32) positioned on the outer end portion (30, 30) of support parts (29, 29; 62, 62; 63, 63; 64, 64), and that between recess (33) and face (35) of each support part (29, 29;, 62, 62; 63, 63; 64, 64) there is at least one channel-like opening (36, 37) having a larger cross-section than that of opening (41), whose aperture (39, 40) in the plane of face (53) is spaced from recess (38).

**Revendications**

1. Dispositif pour la régulation en fonction d'une pression de fluide du moteur d'entraînement (6) d'une machine d'écoulement (7), notamment une pompe, dispositif dans lequel le signal de sortie d'un capteur de pression (4) en liaison fonctionnelle avec le fluide à mesurer, agit sur un régulateur (8), servant à la régulation du moteur d'entraînement (6), dispositif caractérisé par la combinaison:
a) du capteur de pression piézorisistif au silicium (4) avec un détecteur de pression (31) dont le pont de silicium (10) est revêtu d'une couche isolante et est relié à un dispositif de compensation de température ((11), le détecteur de pression (31) étant monté dans un support (27, 28, 59, 60, 61), au moyen duquel la pression différentielle maximale mesurable sur le détecteur de presion (31) est susceptible d'être réglée,
b) d'un convertisseur tension/courant (5) alimenté par le signal de sortie compensé en température du capteur de pression (4),
c) du régulateur ou du moyen de réglage (8) alimenté par la valeur de sortie du convertisseur tension/courant (5) et qui est en relation opérationnelle avec le moteur d'entraîtment (6) de la machine d'écoulement (7).

2. Dispositif selon la revendication 1, caractérisé en ce que la sortie (19) du convertisseur tension/courant (5) est reliée, par l'intermédiaire d'un convertisseur analogique/numérique (15), avec une unité électronique de calcul (17) pour le traitement numérique et l'affichage numérique de la valeur de mesure.

3. Dispositif selon la revendication 1, caractérisé en ce que le moyen de compensation de la température (11) est relié avec le convertisseur tension/courant (5), et en outre, avec un affichage analogique (14).

4. Dispositif selon la revendication 2, caractérisé en ce que la sortie (12) du moyen de compensation de la température (11) est reliée à un amplificateur (13) qui est en relation opérationnelle avec un affichage analogique (14).

5. Dispositif selon la revendication 1, caractérisé en ce que l'unité électronique de calcul (17) comporte un affichage numérique (18).

6. Dispositif selon la revendication 1, caractérisé en ce que le moyen de réglage (8) revêt la forme d'un convertisseur de fréquence.

7. Dispositif selon la revendication 1, caractérisé en ce que le support (27, 28, 59, 60, 61) est constitué de deux pièces de maintien (29, 29; 62, 62; 63, 63; 64, 64) reliées ensemble, qui pour le réglage de la pression différentielle maximale mesurable sur le détecteur de pression (31), sont susceptibles de tourner d'un angle prédéterminé autour de leur axe médian commun (34) lorsqu'elles sont séparées l'une de l'autre, tandis que dans le milieu de la surface en regard l'une de l'autre (35, 35) est ménagé un évidement (38, 38) destiné à recevoir le détecteur de pression (31), ces évidements étant respectivement reliés par un ajour en forme de canal (41, 41) à un évidement en forme de canal (33) qui est respectivement ménagé dans une pièce de raccordement (32, 32) disposée sur la partie externe d'extrémité (30, 30) des pièces de maintien (29, 29; 62, 62; 63, 63; 64, 64) et qu'entre l'évidement (33) et la surface (35) de chaque pièce de maintien (29, 29; 62, 62; 63, 63; 64, 64) est ménagé au moins un ajour en forme de canal (36, 37) avec une section transversale supérieure à la section transversale de l'ajour (41), et dont l'orifice (39, 40) se trouvant dans le plan de la surface (53) est disposé à une certaine distance de l'évidement (38).

Fig.1

Fig.2a

0 110 920

Fig.2

Fig.3

A-A

Fig.4

Fig. 5a

Fig 5b

Fig.6a

Fig.6b